Europäisches Patentamt

European Patent Office

Office européen des brevets

(19)

(11) Veröffentlichungsnummer : **0 501 917 A2**

# (12) EUROPÄISCHE PATENTANMELDUNG

(21) Anmeldenummer : 92810120.3

(22) Anmeldetag : 19.02.92

(51) Int. Cl.$^5$ : **G02B 1/04**

(30) Priorität : 28.02.91 CH 604/91

(43) Veröffentlichungstag der Anmeldung :
02.09.92 Patentblatt 92/36

(84) Benannte Vertragsstaaten :
AT BE CH DE DK ES FR GB GR IT LI LU NL PT
SE

(71) Anmelder : CIBA-GEIGY AG
Klybeckstrasse 141
CH-4002 Basel (CH)

(72) Erfinder : **Mueller von der Haegen, Harro, Dr.**
**Bergstrasse 23**
**W-8752 Laufach (DE)**
Erfinder : **Seiferling, Bernhard, Dr.**
**Dr. Wohlfahrtstrasse 6**
**W-8752 Goldbach (DE)**

(54) **Kontaktlinsen aus thermoformbarem Material.**

(57)    Die Erfindung betrifft Kontaktlinsen aus einem Polymer enthaltend Macrocyclen, die aus Einheiten der Formel I aufgebaut sind,

$$-(-CR^1=CR^2-A-)-    \quad (I)$$

worin A Alkylen, Alkenylen oder durch einen oder mehrere Reste $R^3$ substituiertes Alkylen oder Alkenylen mit 3 bis 10 Kohlenstoffatomen bedeutet, $R^1$ und $R^2$ unabhängig voneinander Wasserstoff oder Niederalkyl bedeuten und $R^3$ für Niederalkyl, fluoriertes Niederalkyl oder einen Siloxanrest steht.

Sie weisen eine Kombination von hoher Härte und Sauerstoffdurchlässigkeit auf. Sie lassen sich auf besonders vorteilhafte Weise, nämlich durch Heisspressen, herstellen.

EP 0 501 917 A2

Die vorliegende Erfindung betrifft neue Kontaktlinsen aus einem Material, das sich durch Heisspressen verarbeiten lässt, die Verwendung dieses Materials zur Herstellung von Kontaktlinsen und die dabei zur Anwendung kommenden Verfahren zur Herstellung dieser Kontaktlinsen.

Die erfindungsgemässen Kontaktlinsen sind nicht wasserhaltig. Sie weisen eine hohe Festigkeit auf und zusätzlich eine überraschend hohe Sauerstoffdurchlässigkeit. So liegen die Dk-Werte bis über 100 (Fatt-Einheiten). Die zugrundeliegenden Materialien sind preiswert, darüberhinaus erfolgt die Herstellung der Kontaktlinsen auf sehr rationelle Weise.

Das Herstellungsverfahren der Wahl ist das sogenannte Heisspressen oder Thermoforming. Dieses Verfahren ist nur auf thermoplastische Materialien anwendbar. Im Zusammenhang mit Kontaktlinsen sind für ein derartiges Verfahren bisher in der Hauptsache Celluloseacetatbutyrat (CAB) und Poly-Methylmethacrylat (PMMA) geeignet. Ausgehend von diesen Materialien können jedoch keine Kontaktlinsen mit vergleichbar hohen Sauerstoffdurchlässigkeiten erhalten werden.

Die erfindungsgemässen Kontaktlinsen bieten daher gegenüber dem Stand der Technik Vorteile auf mehreren Gebieten: So weisen die fertigen Linsen ausgesprochen günstige Materialeigenschaften auf, die Kosten für die Ausgangsmaterialien sind niedrig, und es bedarf nur eines geringen apparativen Aufwandes für die Herstellung der Kontaktlinsen.

Diese und weitere Vorteile können mit erfindungsgemässen Kontaktlinsen erreicht werden, die als wesentlichen Bestandteil Polycycloalkenylene, insbesondere Poly( 1-octen-1,8-diyl), enthalten.

Die Erfindung betrifft daher Kontaktlinsen aus einem Polymer enthaltend Macrocyclen, die aus Einheiten der Formel I aufgebaut sind,

$$-(-CR^1{=}CR^2{-}A{-})-\qquad(I)$$

worin A Alkylen, Alkenylen oder durch einen oder mehrere Reste $R^3$ substituiertes Alkylen oder Alkenylen mit 3 bis 10 Kohlenstoffatomen bedeutet, $R^1$ und $R^2$ unabhängig voneinander Wasserstoff oder Niederalkyl bedeuten und $R^3$ für Niederalkyl, fluoriertes Niederalkyl oder einen Siloxanrest steht.

Alkylen mit 3 bis 10 Kohlenstoffatomen enthält bevorzugt 5 bis 8 Kohlenstoffatome, insbesondere 6 oder 7 Kohlenstoffatome, und steht z.B. für Propylen, Pentylen, Hexylen, Heptylen, Octylen und Decylen, insbesondere für Hexylen und Heptylen.

Alkenylen mit 3 bis 10 Kohlenstoffatomen enthält bevorzugt 5 bis 8 Kohlenstoffatome, insbesondere 6 oder 7 Kohlenstoffatome, und enthält ein oder mehrere Doppelbindungen, insbesondere eine Doppelbindung. Beispiele hierfür sind Propenylen, Pentenylen, Hexenylen, Octenylen und Decenylen, insbesondere Hexenylen und Heptenylen.

Die Anzahl der Reste $R^3$ in einer Einheit der Formel I, soweit vorhanden, beträgt vorzugsweise eins bis drei, insbesondere eins oder zwei.

Niederalkyl weist bis zu 7 Kohlenstoffatome auf, insbesondere bis zu 4 Kohlenstoffatome und bedeutet z.B. Methyl, Ethyl, Propyl, Butyl, tert.-Butyl, Pentyl oder Hexyl, insbesondere Methyl.

Fluoriertes Niederalkyl weist bis zu 7 Kohlenstoffatome auf, insbesondere bis zu 4 Kohlenstoffatome und ist vorzugsweise perfluoriert. Beispiele hierfür sind perfluoriertes Methyl, Ethyl, Propyl, iso-Propyl, Butyl, iso-Butyl oder tert.-Butyl, insbesondere Methyl.

Ein Siloxanrest ist im Rahmen der vorliegenden Erfindung ein über Silicium gebundener Rest mit alternierender Folge von Silicium- und Sauerstoffatomen mit bis zu 13 Siliciumatomen, dessen freie Valenzen Niederalkylreste, insbesondere Methylreste, oder Phenylreste tragen. Beispiele hierfür sind Trimethylsilyloxy-dimethylsilyl, Tris(trimethylsilyloxy)silyl, Triphenylsilyloxy-dimethylsilyl oder Triphenylsilyloxy-diphenylsilyl.

Der Begriff Macrocyclen bedeutet im Zusammenhang mit dieser Erfindung nicht, dass in den beschriebenen Polymeren ausschliesslich macrocyclische Strukturen vorliegen. Vielmehr werden hier unter Macrocyclen Polymere verstanden, wie sie durch Metathese von Cycloolefinen erhalten werden können. Es ist bekannt, dass sich so erhältliche Polymere in ihrer Struktur und in ihren Eigenschaften von Polymeren, die aus linearen Olefinen hergestellt werden, unterscheiden.

Die Macrocyclen sind vorzugsweise aus bis zu 300 Einheiten der Formel I aufgebaut, bevorzugt aus bis zu 200 Einheiten der Formel I. Es können auch Gemische von Macrocyclen verwendet werden, die aus unterschiedlich vielen Einheiten der Formel I aufgebaut sind. Falls Gemische vorliegen, enthalten vorzugsweise zumindest 90 Gewichtsprozent der Macrocyclen bis zu 200 Einheiten der Formel I. Bevorzugt enthalten die Macrocyclen etwa 100 bis 200 Einheiten der Formel I.

Bevorzugt sind Kontaktlinsen aus einem Polymer enthaltend Macrocyclen aus Einheiten der Formel I, worin worin A Alkylen oder durch einen bis drei Reste $R^3$ substituiertes Alkylen mit 3 bis 10 Kohlenstoffatomen bedeutet, $R^1$ und $R^2$ unabhängig voneinander Wasserstoff oder Niederalkyl bedeuten und $R^3$ für Niederalkyl, fluoriertes Niederalkyl oder einen Siloxanrest steht.

Weiter bevorzugt sind Kontaktlinsen aus einem Polymer enthaltend Macrocyclen aus Einheiten der Formel I, worin A Alkylen oder durch einen bis drei Reste $R^3$ substituiertes Alkylen mit 5 bis 8 Kohlenstoffatomen be-

deutet, $R^1$ und $R^2$ unabhängig voneinander Wasserstoff oder Niederalkyl bedeuten und $R^3$ für Niederalkyl steht.

Insbesondere bevorzugt sind Kontaktlinsen aus einem Polymer enthaltend Macrocyclen aus Einheiten der Formel I, worin A Alkylen oder durch einen oder zwei Reste $R^3$ substituiertes Alkylen mit 5 bis 8 Kohlenstoffatomen bedeutet, $R^1$ und $R^2$ Wasserstoff bedeuten und $R^3$ für Niederalkyl steht.

Ganz besonders bevorzugt sind Kontaktlinsen aus einem Polymer enthaltend Macrocyclen aus Einheiten der Formel I, worin A Alkylen mit 5 bis 8 Kohlenstoffatomen bedeutet und $R^1$ und $R^2$ für Wasserstoff stehen. Unter diesen sind speziell jene bevorzugt, worin A für Alkylen mit 6 Kohlenstoffatomen steht.

Eine spezielle Ausführungsform der Erfindung betrifft daher Kontaktlinsen aus einem Polymer bestehend aus Macrocyclen, die aus Einheiten der Formel I aufgebaut sind, worin A Alkylen, Alkenylen oder durch einen oder mehrere Reste $R^3$ substituiertes Alkylen oder Alkenylen mit 3 bis 10 Kohlenstoffatomen bedeutet, $R^1$ und $R^2$ unabhängig voneinander Wasserstoff oder Niederalkyl bedeuten und $R^3$ für Niederalkyl, fluoriertes Niederalkyl oder einen Siloxanrest steht.

Neben den Macrocyclen, die aus Einheiten der Formel I aufgebaut sind, können die Polymere, aus denen die erfindungsgemässen Kontaktlinsen bestehen, jedoch auch weitere Bestandteile enthalten. Der Anteil dieser weiteren Bestandteile liegt geeigneterweise bei 50 Gewichtsprozent oder darunter, insbesondere bei 25 Gewichtsprozent oder darunter, vor allem bei etwa 5 Gewichtsprozent, kann aber auch bei 1 Gewichtsprozent und darunter liegen. Bei den weiteren Bestandteilen handelt es sich vor allem um Vernetzer oder um andere Zusätze.

Gebräuchliche Vernetzer sind Vernetzungsinitiatoren, wie z.B. Peroxide, Azoverbindungen oder Schwefel, oder Oligovinylverbindungen, letztere insbesondere für die Vernetzung der bereits erwähnten anderen Zusätze.

Typische Beispiele für verwendbare Peroxyverbindungen sind Isopropylpercarbonat, tert.-Butylperoctoat, Benzoylperoxid, Lauroylperoxid, Decanoylperoxid, Acetylperoxid, Dicumylperoxid, Bernsteinsäureperoxid, Methylethylketonperoxid, tert.-Butylperoxyacetat, Propionylperoxid, 2,4-Dichlorbenzoylperoxid, tert.-Butylperoxypivalat, Pelargonylperoxid, 2,5-Dimethyl-2,5-bis- (2-ethylhexanoylperoxy)-hexan, p-Chlorbenzoylperoxid, tert.-Butylperoxybutyrat, tert.Butylper-2-ethylhexanoat-, tert.-Butylperoxymaleinsäure, tert.-Butylperoxyisopropylcarbonat, Bis(4-tert.butylcyclohexyl-)peroxydicarbonat und Bis-(1-hydroxycyclohexyl)-peroxid.

Zu Azoverbindungen gehören 2,2'-Azo-bis-isobutyronitril, 2,2'-Azo-bis- (2,4-dimethylvaleronitril), 1,1'-Azo-bis-(cyclohexancarbonitril) und 2,2'-Azo-bis-(2,4-dimethyl-4-methoxyvaleronil).

Geeignete Initiatoren sind ferner Photoinitiatoren, Benzoinether, Darocure-Typen (Merck) oder Irgacure-Typen (CIBA-GEIGY).

Man kann die Vernetzung auch durch die Anwendung anderer Mechanismen herbeiführen, die freie Radikale bilden, wie durch energiereiche Strahlung mit z.B. Röntgenstrahlen, Elektronenstrahlen oder UV-Strahlung.

Eine weitere spezielle Ausführungsform der Erfindung betrifft daher Kontaktlinsen aus einem Polymer enthaltendvernetzte Macrocyclen, die aus Einheiten der Formel I aufgebaut sind, worin A Alkylen, Alkenylen oder durch einen oder mehrere Reste $R^3$ substituiertes Alkylen oder Alkenylen mit 3 bis 10 Kohlenstoffatomen bedeutet, $R^1$ und $R^2$ unabhängig voneinander Wasserstoff oder Niederalkyl bedeuten und $R^3$ für Niederalkyl, fluoriertes Niederalkyl oder einen Siloxanrest steht.

Eine weitere spezielle Ausführungsform der Erfindung betrifft auch Kontaktlinsen aus einem Polymer bestehend aus verntzten Macrocyclen, die aus Einheiten der Formel I aufgebaut sind, worin A, $R^1$ und $R^2$ die vorstehend angegebenen Bedeutungen aufweisen.

Die bereits erwähnten sogenannten anderen Zusätze sind Polymere oder Copolymere, die für Kontaktlinsen üblicherweise verwendet werden. Sie können den Macrocyclen, die aus Einheiten der Formel I aufgebaut sind, in kleinen Mengen zugesetzt werden, geeigneterweise in Mengen von bis zu 20 Gewichtsprozent, vorteilhafterweise in Mengen von bis zu 5 Gewichtsprozent, insbesondere auch in Mengen von 0,1 bis 1 Gewichtsprozent. Diese Zusätze werden in die Macrocyclen üblicherweise nicht, oder jedenfalls nicht in nennenswertem Ausmass, einpolymerisiert, sondern bilden z.B. Homopolymere oder Blockpolymere, die mit den Macrocyclen ein interpenetrierendes Netzwerk ergeben.

Geeignete, kompatible Zusätze sind beispielsweise hydrophobe Verbindungen wie Kohlenwasserstoffe mit einer polymerisierbaren olefinischen Gruppe, z.B. Styrol, derartige Kohlenwasserstoffe, die durch Niederalkyl und/oder Fluor substituiert sind, wie entsprechend substituierte Styrole, oder Niederalkencarbonsäureester, z.B. Niederalkyl-acrylate und -methacrylate, fluorierte Niederalkyl-acrylate und -methacrylate oder Siloxanacrylate und -methacrylate, daneben aber auch Polymere wie Celluloseacetatbutyrat (CAB). Geeignete Zusätze sind aber auch hydrophile Verbindungen wie N-Vinyl-polymerisierbare Heterocyclen, z. B. N-Vinyl-pyrrolidon (VP), oder Poly-N-Vinyl-pyrrolidon (PVP), oder Niederalkencarbonsäureester mit einer polaren funktionellen Gruppe, wie Hydroxy oder Amino, z.B. Hydroxyethyl(meth)acrylat oder N-tert.-Butylaminoethyl(meth)acrylat. Insbesondere wenn Monomere mit einer polymerisierbaren Vinylgruppe verwendet werden, kann es vorteilhaft sein, eine für Kontaktlinsen üblicherweise verwendete Oligovinylverbindung als Vernetzer zusätzlich einzusetzen. Beispiele hierfür sind Ethylenglykoldimethacrylat und Triallylcyanurat.

Eine weitere spezielle Ausführungsform der Erfindung betrifft daher Kontaktlinsen aus einem Polymer enthaltendvernetzte Macrocyclen, die aus Einheiten der Formel I aufgebaut sind, worin A Alkylen, Alkenylen oder durch einen oder mehrere Reste $R^3$ substituiertes Alkylen oder Alkenylen mit 3 bis 10 Kohlenstoffatomen bedeutet, $R^1$ und $R^2$ unabhängig voneinander Wasserstoff oder Niederalkyl bedeuten und $R^3$ für Niederalkyl, fluoriertes Niederalkyl oder einen Siloxanrest steht, sowie bis zu 20 Gewichtsprozent kompatible Zusätze wie vorstehendbeschrieben . Bevorzugte Zusätze sind CAB, VP oder PVP.

Eine weitere spezielle Ausführungsform der Erfindung betrifft daher Kontaktlinsen aus einem Polymer bestehend aus verntzten Macrocyclen, die aus Einheiten der Formel I aufgebaut sind, worin A, $R^1$ und $R^2$ die vorstehend angegebenen Bedeutungen aufweisen sowie aus bis zu 20 Gewichtsprozent kompatiblen Zusätzen wie vorstehend beschrieben. Bevorzugte Zusätze sind CAB, VP oder PVP.

Die Erfindung betrifft auch die Verwendung der Macrocyclen, die aus Einheiten der Formel I aufgebaut sind, insbesondere invernetzter Form, zur Herstellung von Kontaktlinsen. Dies umfasst die Verwendung eines einzigen Typus Macrocyclus, die zu Homopolymeren führt, und die Verwendung von verschiedenen Arten von Macrocyclen, die zu Interpolymeren führt. Daneben umfasst dies auch die Verwendung von Macrocyclen zusammmen mit geeigneten kompatiblen Zusätzen, wie vorstehend beschrieben.

Macrocyclen, die aus Einheiten der Formel I aufgebaut sind, sind vom Typus her bekannt und können auf an sich bekannte Weise durch Metathese hergestellt werden, z.B. wie in Houben Weyl, Band E 20 II, S. 918 ff beschrieben. Man geht dabei von den zugrundeliegenden Monocyclen aus. Beispielsweise kann aus Cycloocten das Poly(1-octen- 1,8diyl-) hergestellt werden, dessen Verwendung erfindungsgemäss besonders bevorzugt ist. Speziell dieser Macrocyclus ist auch im Handel erhältlich, z.B. als Vestenamer® 6213 (Firma Hüls). Andere Macrocyclen sind auf analoge Weise herstellbar. Die weiteren Bestandteile der erfindungsgemässen Kontaktlinsen sind ebenfalls bekannte Verbindungen.

Die erfindungsgemässen Kontaktlinsen können auf an sich bekannte Weise hergestellt werden, indem Macrocyclen, die aus Einheiten der Formel I aufgebaut sind, allein oder zusammmen mit den beschriebenen weiteren Bestandteilen, bevorzugt jedoch zusammmen zumindest mit einem Vernetzer , durch Heisspressen mit geeigneten Stempeln zu Kontaktlinsen geformt werden.

Eine Besonderheit deserfindungsgemässen Verfahrens liegt darin, dass die Vernetzung während des Heisspressens erfolgen kann. Dabei wird das Material vom Thermoplasten zum Thermodur. Die Vernetzung kann auch durch das Heisspressen ausgelöst werden und sich noch anschliessend daran fortsetzen, oder sie kann auch erst im Anschluss an das Heisspressen erfolgen.

Geeigneterweise bereitet man die Macrocyclen und die eventuell verwendeten weiteren Bestandteile für das Heisspressen in der Weise vor, dass man Folien aus ihnen giesst oder die Bestandteile in Knetern schonend verarbeitet. Folien können z.B. aus verdünnten Lösungen in inerten Lösungsmittel, wie halogenierten Kohlenwasserstoffen, z.B. Dichlormethan, oder Ethern, z.B. Tetrahydrofuran, gegossen werden. Daran schliesst sich eine schonende Trocknung an, bei der das Lösungsmittel verdampft. Geeignet sind z.B. mindestens 10 Stunden Trocknung bei Raumtemperatur oder 1 bis 3 Stunden bei Raumtemperatur gefolgt von 1 bis 5 Stunden bei 50 bis 80°C. Alternativ können die Bestandteile auch bei Temperaturen oberhalb von 30°C, aber unterhalb der Scorchtemperatur (der maximalen Verarbeitungs-Temperatur des jeweiligen Vernetzers, bei der dieser noch keinen massgeblichen Aktivitätsverlust erleidet) in handelsüblichen Knetern vermischt werden. Dabei wird geeigneterweise unter vermindertem Druck gearbeitet, um die Bildung von Luftblasen zu vermeiden.

Die Bedingungen, unter denen das Heisspressen erfolgt, sind im Rahmen der dem Fachmann geläufigen Parameter in weiten Grenzen unkritisch. Geeignete Drucke liegen bei 5 bis 20 bar, die Temperatur, beispielsweise 50 bis 180°C, ist jeweils auf den Vernetzungsinitiator abgestimmt, die benötigte Zeit liegt normalerweise im Bereich weniger Minuten, beispielsweise bis zu 10 Minuten. Falls erforderlich können handelsübliche Trennhilfen zum Ablösen der Kontaktlinse vom Presswerkzeug verwendet werden.

Die nachstehenden Beispiele sollen den Gegenstand der Erfindung näher erläutern, ohne ihn jedoch in irgendeiner Weise, etwa auf den Umfang der Beispiele, zu beschränken. In den Beispielen werden Temperaturangaben in Grad Celsius gemacht. Gehaltsangaben sind immer Massenanteile in Prozent.

Die Sauerstoffpermeabilität wird nach Fatt an planparallelen Scheiben bestimmt. In den jeweiligen Tabellen mit physikalischen Daten wird die Dicke der vermessenen Scheiben im Anschluss an den Dk-Wert unter der Bezeichung "d" angegeben. Reissfestigkeit und Reissdehnung werden an einer Universalprüfmaschine Typ 144501 der Fa. Zwick bestimmmt. Die Zuggeschwindigkeit beträgt 500 mm pro Minute. Als Prüfkörper werden planparallele Folienstücke von 4 mm Breite und einer Messlänge von 5 mm verwendet.

In den Beispielen werden für chemische Verbindungen folgende Abkürzungen verwendet:

BCHPC    Bis(4-tert.butylcyclohexyl-)peroxydicarbonat
CAB       Celluloseacetatbutyrat

DCP      Dicumylperoxid
PVP      Poly-N-Vinylpyrrolidon
TAC      Triallylcyanurat
TBPEH    tert.-Butylper-2-ethylhexanoat
VP       Vinylpyrrolidon

Der Gehalt an Vernetzer und weiteren Zusätzen ist jeweils bezogen auf Poly(1-octen-1,8-diyl).

Beispiel 1:

Zu einer 10%igen Lösung von Poly(1-octen-1,8-diyl) (Handelsname Vestenamer® 6213) in Dichlormethan gibt man 4% tert.-Butylper-2-ethylhexanoat. Aus der Lösung wird auf einer Glasplatte eine Folie gegossen. Durch dreistündiges Trocknen bei Raumtemperatur und dreistündiges Trocknen bei 70°C wird das Dichlormethan verdampft. Aus der getrockneten Folie werden mit geeigneten Stempeln bei 130°C und einem Druck von 5 bis 20 bar während 5 Minuten Kontaktlinsen gepresst. Die so erhaltenen Kontaktlinsen weisen eine Sauerstoffpermeabilität (Dk) von 79 auf, eine Reissfestigkeit von 2,6 MPa und eine Reissdehnung von 920%.

Beispiele 2 bis 10:

Auf analoge Weise werden weitere Presslinge auf der Basisvon Poly(1-octen-1,8diyl-) (Handelsname Vestenamer® 6213) hergestellt. Sie enthalten die nachstehend wiedergegebenen Anteile Vernetzer und weitere Zusätze, angegeben ist ferner die jeweilige Presstemperatur. Das in Beispiel 7 verwendete PVP hat eine Molmasse von 25000. Eine spezielle Vorgehensweise wird bei Beispiel 10 angewendet: Die Lösung des Poly(1-octen-1,8-diyl) wird mit VP und TAC sowie 0,5% Azoisobutyronitril (bezogen auf VP/TAC) versetzt, von Sauerstoff befreit, in mehreren Schritten auf 80°C erhitzt und 2 Stunden bei dieser Temperatur gehalten. Anschliessen wird TBPEH zugegeben und die Folie wie beschrieben gegossen.

| Nummer | Vernetzer | | Presstemp. | Zusatz | |
| --- | --- | --- | --- | --- | --- |
| | Typ | Gehalt % | °C | Typ | Gehalt % |
| 2 | TBPEH | 10 | 130 | - | - |
| 3 | TBPEH | 20 | 130 | - | - |
| 4 | DCP | 3 | 130 | - | - |
| 5 | BCHCP | 5 | 90 | - | - |
| 6 | TBPEH | 20 | 130 | CAB | 1 |
| 7 | DCP | 0,5 | 130 | PVP | 0,1 |
| 8 | DCP | 0,5 | 130 | CAB | 5 |
| 9 | DCP | 0,5 | 130 | TAC | 0,5 |
| 10 | TBPEH | 5 | 90 | VP/TAC | 15/5 |

Physikalische Daten der Presslinge von Beispiel 1 bis 10

| Nummer | $O_2$-Permeabilität | | Brechzahl | Reissfestigkeit | Reissdehnung |
|--------|------|--------|-------------|-----------------|--------------|
|        | Dk   | d(mm)  | $n_D^{20}$  | MPa             | %            |
| 1      | 79   | 0,09   | -           | 2,6             | 920          |
| 2      | 84   | 0,16   | -           | 3,2             | 690          |
| 3      | 57   | 0,11   | -           | 2,1             | 230          |
| 4      | 53   | 0,19   | 1,497       | 2,0             | 130          |
| 5      | -    | -      | -           | 3,9             | 1670         |
| 6      | 65   | 0,16   | -           | 3,3             | 730          |
| 7      | 59   | 0,19   | 1,497       | 1,9             | 2030         |
| 8      | 22   | 0,16   | 1,500       | 10,0            | 20           |
| 9      | 74   | 0,31   | 1,497       | 2,6             | 1790         |
| 10     | 75   | 0,22   | -           | 3,7             | 1480         |

Beispiel 11:

Zu Poly(1-octen-1,8-diyl) (Handelsname Vestenamer® 6213) gibt man 5% tert.-Butylper-2-ethylhexanoat und arbeitet den Vernetzer in einem handelsüblichen Kneter unter reduziertem Druck bei einer Temperatur von 35°C ein. Aus der erhaltenen Masse werden mit geeigneten Stempeln bei 160°C und einem Druck von 5 bis 20 bar während 5 Minuten Kontaktlinsen gepresst. Die so erhaltenen Kontaktlinsen weisen eine Sauerstoffpermeabilität (Dk) von 106 auf und eine Reissfestigkeit von 2,7 MPa.

Beispiele 12 bis 15:

Auf analoge Weise werden weitere Presslinge auf der Basis von Poly-(1-octen-1,8-diyl) (Handelsname Vestenamer® 6213) hergestellt. Sie enthalten die folgenden Anteile Vernetzer , angegeben istferner die jeweilige Presstemperatur:

| Nummer | Vernetzer | | Presstemp. |
|--------|-----------|--------|------------|
|        | Typ       | Gehalt |            |
|        |           | %      | °C         |
| 12     | TBPEH     | 2      | 160        |
| 13     | TBPEH     | 1      | 160        |
| 14     | BCHPC     | 5      | 90         |
| 15     | BCHPC     | 2      | 90         |

Physikalische Daten der Presslinge von Beispiel 11 bis 15

| Nummer | $O_2$-Permeabilität | | Brechzahl | Reissfestigkeit | Reissdehnung |
|---|---|---|---|---|---|
| | Dk | d(mm) | $n_D^{20}$ | MPa | % |
| 11 | 106 | 0,3 | - | 2,7 | - |
| 12 | 98 | 0,3 | - | 3,2 | 1990 |
| 13 | 95 | 0,3 | - | 1,6 | 1547 |
| 14 | 82 | 0,29 | - | 3,0 | 1920 |
| 15 | 99 | 0,30 | - | 1,7 | 2000 |

**Patentansprüche**

1. Kontaktlinsen aus einem Polymer enthaltend Macrocyclen, die aus Einheiten der Formel I aufgebaut sind,

$$-(-CR^1=CR^2-A-)-\qquad \text{(I)}$$

worin A Alkylen, Alkenylen oder durch einen oder mehrere Reste $R^3$ substituiertes Alkylen oder Alkenylen mit 3 bis 10 Kohlenstoffatomen bedeutet, $R^1$ und $R^2$ unabhängig voneinander Wasserstoff oder Niederalkyl bedeuten und $R^3$ für Niederalkyl, fluoriertes Niederalkyl oder einen Siloxanrest steht.

2. Kontaktlinsen gemäss Anspruch 1, dadurch gekennzeichnet dass die Macrocyclen vernetzt sind

3. Kontaktlinsen gemäss Anspruch 1 oder 2, dadurch gekennzeichnet, dass A Alkylen oder durch einen bis drei Reste $R^3$ substituiertes Alkylen mit 3 bis 10 Kohlenstoffatomen bedeutet, $R^1$ und $R^2$ unabhängig voneinander Wasserstoff oder Niederalkyl bedeuten und $R^3$ für Niederalkyl, fluoriertes Niederalkyl oder einen Siloxanrest steht.

4. Kontaktlinsen gemäss Anspruch 1 oder 2, dadurch gekennzeichnet, dass A Alkylen oder durch einen bis drei Reste $R^3$ substituiertes Alkylen mit 5 bis 8 Kohlenstoffatomen bedeutet, $R^1$ und $R^2$ unabhängig voneinander Wasserstoff oder Niederalkyl bedeuten und $R^3$ für Niederalkyl steht.

5. Kontaktlinsen gemäss Anspruch 1 oder 2, dadurch gekennzeichnet, dass A Alkylen oder durch einen oder zwei Reste $R^3$ substituiertes Alkylen mit 5 bis 8 Kohlenstoffatomen bedeutet, $R^1$ und $R^2$ Wasserstoff bedeuten und $R^3$ für Niederalkyl steht.

6. Kontaktlinsen gemäss Anspruch 1 oder 2, dadurch gekennzeichnet, dass A Alkylen mit 5 bis 8 Kohlenstoffatomen bedeutet und $R^1$ und $R^2$ für Wasserstoff stehen.

7. Kontaktlinsen gemäss Anspruch 1 oder 2, dadurch gekennzeichnet, dass A Alkylen mit 6 Kohlenstoffatomen bedeutet und $R^1$ und $R^2$ für Wasserstoff stehen.

8. Kontaktlinsen gemäss Anspruch 1 oder 2, dadurch gekennzeichnet, dass sie aus einem Polymer aufgebaut sind bestehend aus Macrocyclen, die aus Einheiten der Formel I aufgebaut sind, worin A Alkylen, Alkenylen oder durch einen oder mehrere Reste $R^3$ substituiertes Alkylen oder Alkenylen mit 3 bis 10 Kohlenstoffatomen bedeutet, $R^1$ und $R^2$ unabhängig voneinander Wasserstoff oder Niederalkyl bedeuten und $R^3$ für Niederalkyl, fluoriertes Niederalkyl oder einen Siloxanrest steht.

9. Kontaktlinsen gemäss Anspruch 8, dadurch gekennzeichnet, A Alkylen mit 6 Kohlenstoffatomen bedeutet und $R^1$ und $R^2$ für Wasserstoff stehen.

10. Kontaktlinsen gemäss Anspruch 1 oder 2, dadurch gekennzeichnet, dass sie aus einem Polymer aufgebaut sind enthaltend vernetzte Macrocyclen, die aus Einheiten der Formel I aufgebaut sind, worin A Alky-

7

len, Alkenylen oder durch einen oder mehrere Reste R³ substituiertes Alkylen oder Alkenylen mit 3 bis 10 Kohlenstoffatomen bedeutet, R¹ und R² unabhängig voneinander Wasserstoff oder Niederalkyl bedeuten und R³ für Niederalkyl, fluoriertes Niederalkyl oder einen Siloxanrest steht, sowie aus bis zu 20 Gewichtsprozent kompatibler Zusätze wie Vernetzer und üblichen Kontaktlinsenmaterialien.

11. Kontaktlinsen gemäss Anspruch 10, dadurch gekennzeichnet, dass die üblichen Kontaktlinsenmaterialien ausgewählt sind unter hydrophoben Verbindungen wie Kohlenwasserstoffen mit einer polymerisierbaren olefinischen Gruppe, derartigen Kohlenwasserstoffen, die durch Niederalkyl und/oder Fluor substituiert sind, Niederalkencarbonsäureestem, z.B. Niederalkyl-acrylaten und -methacrylaten, fluorierten Niederalkyl-acrylaten und -methacrylaten, Siloxan-acrylaten und -methacrylaten, daneben aber auch Polymeren wie Celluloseacetatbutyrat (CAB), sowie hydrophilen Verbindungen wie N-Vinyl-polymerisierbaren Heterocyclen, und Niederalkencarbonsäureestem mit einer polaren funktionellen Gruppe, wie Hydroxy oder Amino.

12. Kontaktlinsen gemäss Anspruch 10, dadurch gekennzeichnet, dass die üblichen Kontaktlinsenmaterialien ausgewählt sind unter Celluloseacetatbutyrat, N-Vinyl-pyrrolidon oder Poly-N-vinylpyrrolidon.

13. Verwendung der Macrocyclen, die aus Einheiten der Formel I gemäss Anspruch 1 aufgebaut sind, insbesondere invernetzter Form, zur Herstellung von Kontaktlinsen.

14. Verfahren zur Herstellung von Kontaktlinsen gemäss Anspruch 1, dadurch gekennzeichnet, dass Macrocyclen, die aus Einheiten der Formel I aufgebaut sind, allein oder zusammen mit den beschriebenen weiteren Bestandteilen, bevorzugt jedoch zusammen zumindest mit einem Vernetzer, durch Heisspressen mit geeigneten Stempeln zu Kontkatlinsen geformt werden.